# EUROPÄISCHE PATENTANMELDUNG

(11) **EP 3 270 020 A1**
(43) Veröffentlichungstag der Anmeldung: **17.01.2018**
(21) Anmeldenummer: 17180120.2
(22) Anmeldetag: 06.07.2017
(51) Int. Cl.: F16K 27/00, F15B 13/08

(54) **VORRICHTUNG ZUR BEFESTIGUNG EINES VENTILS**

(30) Priorität: 12.07.2016 DE 102016112796
(71) Anmelder: A. u. K. Müller GmbH & Co. KG, 40595 Düsseldorf (DE)
(72) Erfinder: A. u. K. Müller GmbH & Co. KG, 40595 Düsseldorf (DE)
(74) Vertreter: Feder Walter Ebert

(57) **Zusammenfassung**

Vorrichtung (1) zur Befestigung eines Ventils (21), insbesondere eines Kartuschenventils, in einer Ventilöffnung, mit mindestens einem entgegen der Kraft einer sich spannenden Feder (2) bewegbaren Riegelschieber (3) zur Verriegelung des Ventils in der Ventilöffnung.

## Beschreibung

Die vorliegende Erfindung betrifft eine Vorrichtung zur Befestigung eines Ventils, insbesondere eines Kartuschenventils, in einer Ventilöffnung. Einen weiteren Gegenstand der Erfindung bildet eine Ventilanordnung mit einem mehrere Ventilöffnungen aufweisenden Manifold und mehreren in den Ventilöffnungen befestigten Ventilen.

Ventile werden in vielen Bereichen der Technik zum Schalten von Fluidströmen beispielsweise in Sanitäranwendungen, in Getränkeautomaten, in Kaffee- bzw. Espressomaschinen und ähnlichen Vorrichtungen verwendet.

Häufig kommen dabei zum Zwecke einer möglichst großen Gestaltungsfreiheit der in die Ventile hinein- und aus diesen herausgeführten Wasserwege insbesondere im Falle beengter Bauraumsituationen so bezeichnete Manifolds zum Einsatz, bei denen es sich um Mehrfachverteiler mit mehreren Ventilöffnungen und mehreren Ventilen handelt, bei denen jeweils ein Ventil in einer entsprechenden Ventilöffnung angeordnet wird. Auf diese Weise lassen sich viele Ventile auf engem Raum anordnen.

Die einzelnen Ventile werden an dem Mehrfachverteiler bzw. dem Manifold lösbar befestigt, so dass diese beispielsweise zu Wartungszwecken oder zum Austausch von Verschleißteilen usw. demontiert werden können.

Häufig werden die Ventile über Schraubverbindungen in der jeweiligen Ventilöffnung befestigt, was sich in der Praxis zwar durchaus bewährt hat, aufgrund der damit verbundenen Montagetätigkeiten jedoch immer einen gewissen Montageaufwand mit sich bringt, insbesondere in solchen Fällen, in denen unter ohnehin beengten Platzverhältnissen zusätzliches Werkzeug zur Befestigung der Ventile verwendet werden muss.

Aufgabe der vorliegenden Erfindung ist es, eine Vorrichtung zur Befestigung eines Ventils wie auch eine Ventilanordnung anzugeben, welche sich durch eine vereinfachte Montagemöglichkeit auszeichnen.

Bei einer Vorrichtung der eingangs genannten Art wird diese Aufgabe dadurch gelöst, dass mindestens ein entgegen der Kraft einer sich spannenden Feder bewegbarer Riegelschieber zur Verriegelung des Ventils in der Ventilöffnung vorgesehen ist.

Über den Riegelschieber kann eine lösbare Verriegelung des Ventils auf montagefreundliche, wenige Handgriffe und auch kein Zusatzwerkzeug erfordernde Art und Weise erfolgen. Über den Riegelschieber kann eine form- und/oder kraftschlüssige Befestigung des Ventils in der zugehörigen Ventilöffnung erreicht werden. Durch Entriegeln des Riegelschiebers kann das Ventil im Bedarfsfall auf einfache Weise demontiert und aus der Ventilöffnung entnommen werden.

Eine vorteilhafte Ausgestaltung sieht vor, dass der Riegelschieber aus dessen Verriegelungsstellung in Richtung dessen Offenstellung entgegen der Kraft der Feder bewegbar ist. In der Verriegelungsstellung wird das Ventil durch eine entsprechende Geometrie des Verriegelungsbereichs des Riegelschiebers formschlüssig und über die auf den Riegelschieber wirkende Federkraft spielfrei in der Ventilöffnung gehalten.

Vorteilhafterweise weist der Riegelschieber eine bügelförmige Geometrie auf, an deren Innenseite ein Verriegelungsbereich vorgesehen ist. Beispielsweise kann das zu befestigende Ventil innerhalb der bügelförmigen Geometrie angeordnet und über den Verriegelungsbereich verriegelt werden. Der bügelförmige Riegelschieber kann insbesondere eine U-bügelförmige Geometrie aufweisen.

Eine weitere vorteilhafte Ausgestaltung des Riegelschiebers sieht vor, dass dieser einen bogenförmigen Verriegelungsbereich aufweist. Durch Verwendung eines bogenförmigen Verriegelungsbereichs kann eine günstige Verriegelung an einem zylindrischen Gegenstück des Ventils und insbesondere einer an dieser vorgesehenen Verriegelungsstruktur erreicht werden.

Der bogenförmige Verriegelungsbereich kann insbesondere kreisbogenförmig ausgebildet sein, insbesondere nach Art eines Halbkreisbogens. Der Radius des Verbindungsbereichs kann an den Durchmesser des zu befestigenden Ventils angepasst sein.

Im Hinblick auf eine einfache Betätigung der Befestigungsvorrichtung ist es von Vorteil, wenn der Riegelschieber einen Betätigungsbereich aufweist. Über den insbesondere als Druckstück ausgebildeten Betätigungsbereich kann beispielsweise die Bewegung des Riegelschiebers von Hand initiiert werden.

Eine weitere Ausgestaltung sieht vor, dass dem Riegelschieber ein Sicherungselement zugeordnet ist, über welches Bewegungen des Riegelschiebers blockierbar sind. Das Sicherungselement kann nach erfolgter Befestigung des Ventils beispielsweise im Gehäuse einer Espressomaschine an der Befestigungsvorrichtung angebracht werden. Auf diese Weise kann verhindert werden, dass bei anderen Wartungs- oder Montagetätigkeiten innerhalb des Gehäuses ungewollt der Riegelschieber betätigt und die Befestigung des Ventils gelöst wird.

Eine ganz besonders vorteilhafte Ausgestaltung sieht vor, dass zwei gegenläufig angeordnete Riegelschieber vorgesehen sind. Über die zwei gegenläufig angeordneten Riegelschieber kann entsprechend der Kraft der sich spannenden Federn eine beidseitig auf das zu befestigende Ventil wirkende Verriegelung aufgebracht werden. Es ergibt sich eine Art beidseitige Riegelfalle und damit eine zuverlässige Befestigung des Ventils von zwei Seiten her.

Eine weitere vorteilhafte Ausgestaltung sieht vor, dass die beiden Riegelschieber in einem gemeinsamen Riegelgehäuse angeordnet sind, welches eine Gehäuseöffnung zur Aufnahme des Ventils aufweist. Die beiden Riegelschieber können als Montageeinheit gemeinsam mit dem Gehäuse montiert werden. Die Größe der Gehäuseöffnung kann der Größe der Ventilöffnung entsprechen, insbesondere können beide Öffnungen den gleichen Durchmesser aufweisen.

In diesem Zusammenhang ist es ferner von Vorteil, wenn die Riegelschieber derart angeordnet sind, dass diese in deren Verriegelungsstellung in die Gehäuseöffnung hineinragen und diese in deren Offenstellung freigeben.

Der Durchmesser der Gehäuseöffnung kann an den Durchmesser des Ventils angepasst sein. Durch die in die Öffnung hereinragenden Riegelschieber ergibt sich eine formschlüssige Befestigung des in diese eingesteckten Ventils, so dass es nicht möglich ist, das Ventil aus dieser bzw. aus der darunter liegenden Ventilöffnung herauszuziehen. Erst wenn die Riegelschieber in deren Offenstellung zurückgeführt und die Kontur der Gehäuseöffnung vollständig freigegeben wurde, kann das Ventil aus der Öffnung entnommen werden.

Im Hinblick auf eine Ventilanordnung der eingangs genannten Art wird zur Lösung der vorstehenden Aufgabe vorgeschlagen, dass deren Ventile jeweils über eine Befestigungsvorrichtung mit einem oder mehreren der vorstehend genannten Merkmale in den Ventilöffnungen befestigt sind. Es ergeben sich die bereits in diesem Zusammenhang mit der Befestigungsvorrichtung erläuterten Vorteile.

Eine vorteilhafte Ausgestaltung der Ventilanordnung sieht vor, dass das Manifold als Verteilerblock ausgebildet ist. Beispielsweise kann es sich bei dem Verteilerblock um einen kubischen Verteilerblock handeln, durch dessen Inneres mehrere Fluidkanäle nach Art von Bohrungen hindurchgeführt sind.

Eine weitere Ausgestaltung sieht vor, dass die Verteileröffnungen entlang einer Langseite des Manifolds reihenförmig angeordnet sind, wobei die Riegelrichtungen der Riegelschieber quer zu der Langseite ausgerichtet sind. Auf diese Weise lassen sich die Vorrichtungen aus einer Richtung quer zur Langseite des Manifolds auf einfache Weise beispielsweise mit dem Daumen und dem Zeigefinger betätigen und die Befestigung des Ventils mit nur einem Handgriff herstellen bzw. lösen.

Weiterhin wird vorgeschlagen, dass die Gehäuseöffnungen der Befestigungsvorrichtungen koaxial zu den Ventilöffnungen angeordnet sind. Auf diese Weise lässt sich das Ventil gleichzeitig durch die Gehäuseöffnung der Befestigungsvorrichtung hindurch in die Ventilöffnung einstecken.

Weiterhin wird vorgeschlagen, dass die Ventile Verriegelungsstrukturen aufweisen, die mit den Riegelelementen verriegelnd zusammenwirken. Insbesondere ist es in diesem Zusammenhang von Vorteil, wenn die Verriegelungsstrukturen nach Art umlaufender Nuten ausgebildet sind. Der Vorteil umlaufender Nuten liegt darin, dass die Ventile unabhängig von deren Drehstellung über die Befestigungsvorrichtung verriegelt werden können.

Weitere Einzelheiten und Vorteile einer erfindungsgemäßen Befestigungsvorrichtung wie auch einer entsprechenden Ventilanordnung werden nachfolgend unter Zuhilfenahme einer beigefügten Zeichnung eines Ausführungsbeispiels erläutert werden. Darin zeigen:
- Fig. 1: in perspektivischer Ansicht eine erfindungsgemäße Ventilanordnung mit einem Manifold und mehreren an diesem angeordneten Ventilen,
- Fig. 2: ein entsprechendes Ventil in seitlicher Ansicht,
- Fig. 3: das Ventil gemäß Fig. 2 von einer anderen Seite her betrachtet,
- Fig. 4: eine perspektivische Ansicht des Ventils aus Fig. 2,
- Fig. 5: eine weitere perspektivische Ansicht des Ventils aus Fig. 2,
- Fig. 6: eine erfindungsgemäße Befestigungsvorrichtung in perspektivischer Ansicht,
- Fig. 7: ein Manifold in perspektivischer Ansicht,
- Fig. 8: verschiedene Ansichten einer Befestigungsvorrichtung,
- Fig. 9: mehrere Ansichten einer Befestigungsvorrichtung zur Veranschaulichung der Vorgänge beim Befestigen bzw. Lösen eines Ventils
- Fig. 10: eine perspektivische Ansicht eines Riegelschiebers,
- Fig. 11: eine perspektivische Ansicht eines Riegelgehäuses und
- Fig. 12: eine perspektivische Ansicht eines Sicherungselements.

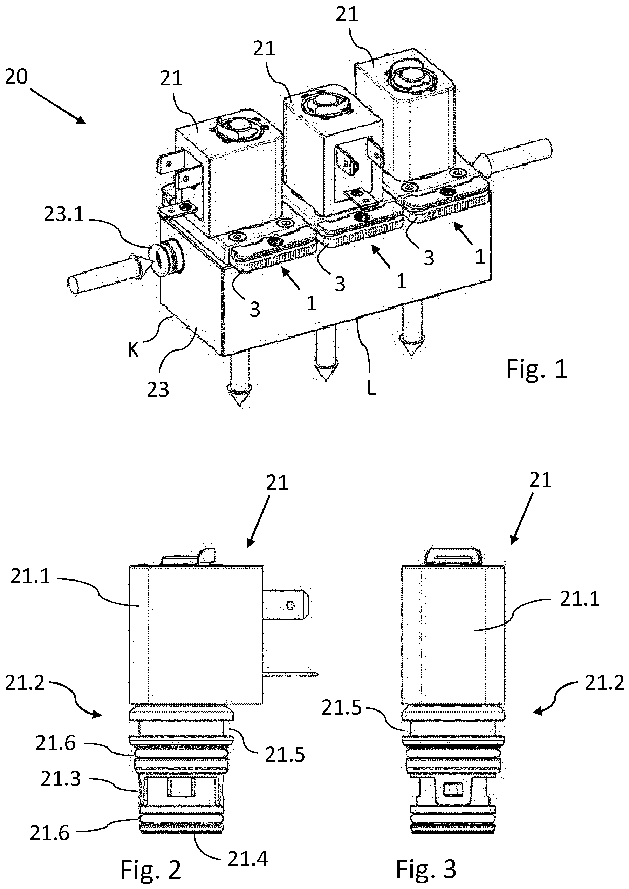

Fig. 1 zeigt eine Ventilanordnung 20 mit insgesamt drei als Kartuschenventile ausgebildeten Ventilen 21, die von oben her in Ventilöffnungen eines als Verteilerblock ausgebildeten Manifolds 23 eingesetzt und in den Ventilöffnungen jeweils über separate Befestigungsvorrichtungen 1 lösbar befestigt sind.

Wie in Fig. 1 zu erkennen ist, können die Ventile 21 in unterschiedlichen Ausrichtungen an dem Manifold 23 befestigt werden, je nach Einbausituation und räumlichen Gegebenheiten beispielsweise im Inneren eines Kaffeemaschinengehäuses. Das Manifold 23 ist von insgesamt länglicher Gestalt, wobei an der Langseite L die Ventile 21 entlang einer Reihe angeordnet sind. An der Kurzseite K des Manifolds 23 befindet sich ein Einlass 23.1, der als durchgängige Anschlussbohrung ausgebildet ist.

Gemäß der Darstellungen in den Fig. 2 und 3 weisen die Ventile 21 jeweils eine in etwa kubische Spule 21.1 und unterhalb der Spule 21.1 einen zylindrischen Einsteckbereich 21.2 auf, welcher in eine Ventilöffnung des Manifolds 23 von oben her einsteckbar ist. An dem Einsteckbereich 21.2 ist seitlich ein Ventileinlass 21.3 und im Bereich des unteren Endes ein Ventilauslass 21.4 vorgesehen, wodurch sich die in Fig. 1 angedeuteten Strömungswege realisieren lassen. Zur Abdichtung innerhalb der Ventilöffnung des Manifolds 23 sind zwei O-Ring-Dichtungen 21.6 vorgesehen, von denen sich eine oberhalb und eine unterhalb des Ventileinlasses 21.3 befindet.

Alternativ zu der Darstellung in Fig. 1 können die Strömungswege auch umgekehrt sein. In diesem Fall dient das Element 23.1 des Manifolds 23 als Auslass. Die Funktionalitäten des Einlasses bzw. Auslasses am Ventil 21 ändern sich dann entsprechend.

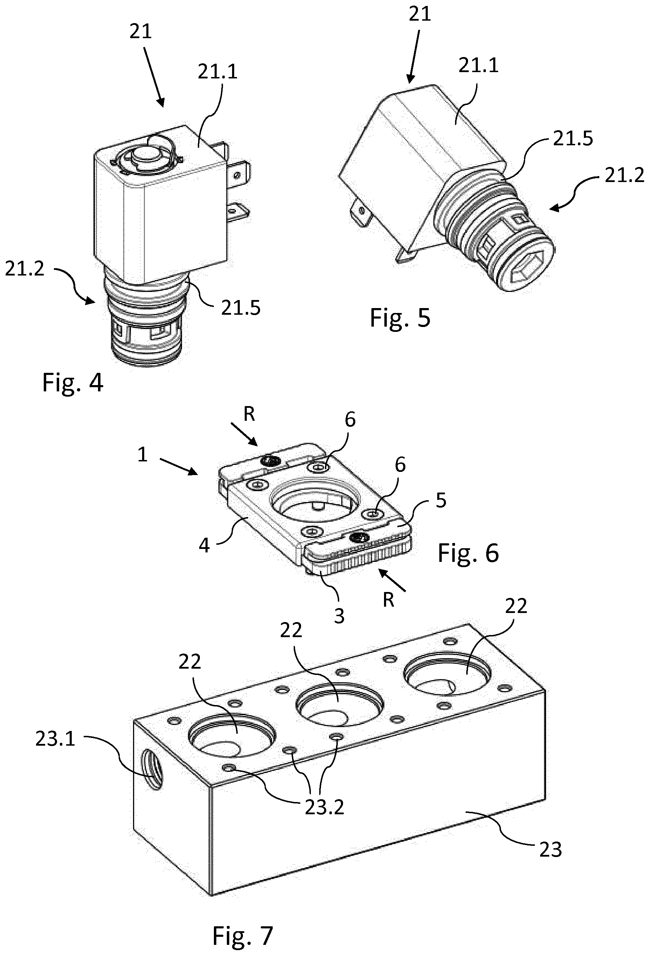

Wesentliches Element des Einsteckbereichs 21.2 des Ventils 21 ist eine Verriegelungsstruktur 21.5, welche mit einem Riegelschieber 3 der Befestigungsvorrichtung 1 verriegelnd zusammenwirkt. Beim Ausführungsbeispiel ist die Verriegelungsstruktur 21.5 als umlaufende Nut ausgebildet, weshalb es ohne weiteres möglich ist, das Ventil 21 in den in Fig. 1 dargestellten Positionen zu befestigen, vgl. auch Fig. 4 und Fig. 5.

Wie nachfolgend im Einzelnen dargelegt werden wird, lassen sich die einzelnen Ventile 21 auf einfache Weise mit jeweils nur einem Handgriff an dem Manifold 23 befestigen, wozu es lediglich erforderlich ist, die Betätigungsvorrichtung 1 mit zwei Fingern von beiden Seiten des Manifolds 23 her kommend zu greifen und die Riegelschieber 3 in einer Riegelrichtung quer zur Längsseite L des Manifolds 23 nach innen zu drücken.

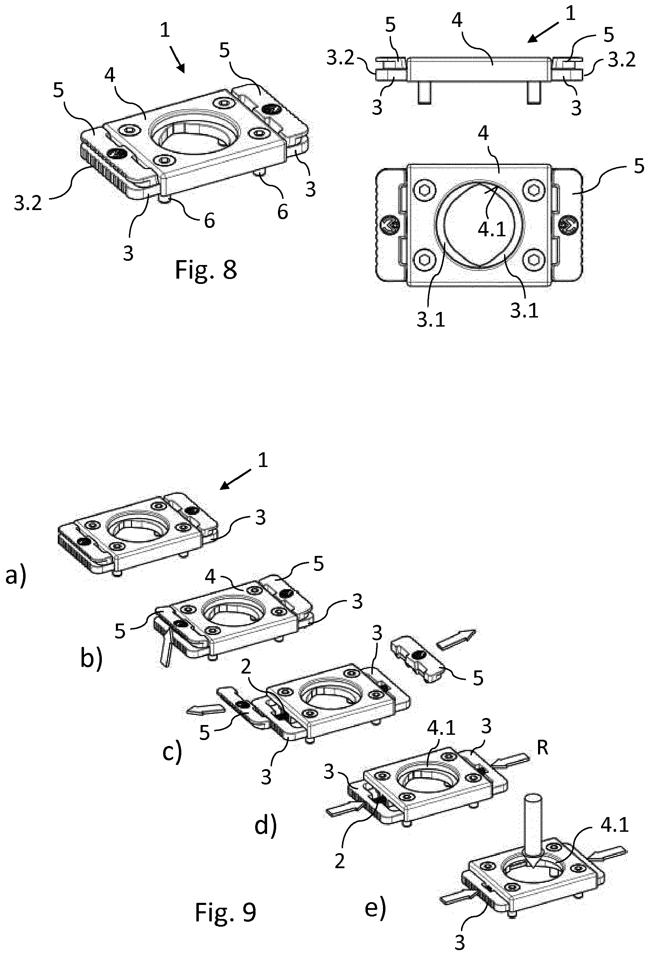

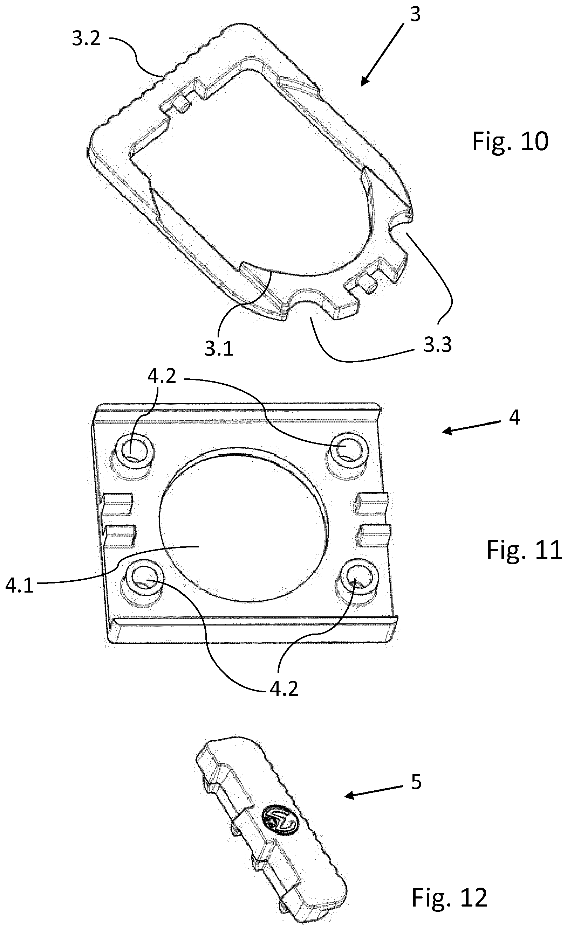

Der Darstellung beispielsweise auch in Fig. 8 lässt sich entnehmen, dass die Befestigungsvorrichtung 1 jeweils zwei Riegelschieber 3 aufweist, welche gemäß der Darstellung in Fig. 6 in entgegengesetzten Riegelrichtungen R arbeiten. Die beiden Riegelschieber 3 befinden sich innerhalb eines Gehäuses 4, in welchem diese bewegbar gelagert sind, vgl. auch Fig. 11. Die betätigungsseitigen Enden der Riegelschieber 3 stehen aus dem Gehäuse 4 hervor und sind nach Art eines Betätigungsbereichs ausgebildet, der mit einer Riffelung für einen sicheren Griff der Hand des Bedieners ausgebildet ist. An dem dem Befestigungsbereich 3.2 gegenüberliegenden Ende weisen die Riegelschieber 3 jeweils einen Verriegelungsbereich 3.1 auf, der beim Ausführungsbeispiel von bogenförmiger Geometrie ist, vgl. auch die Darstellung in Fig. 10. Der Durchmesser dieses Bogens ist an die nutförmige Verriegelungsstruktur 21.5 derart angepasst, dass diese in der Verriegelungsstellung des Riegelelements 3 über einen möglichst weiten Umfangsbereich in die Nut eintritt. Ferner sind gemäß der Darstellung in Fig. 8 an der dem Betätigungsbereich 3.2 gegenüberliegenden Ende Ausnehmungen 3.3 vorgegeben. Diese dienen als Anschlag. Insbesondere können die Ausnehmungen 3.3 an den zylindrischen Befestigungsmitteln 6 anliegen.

Das Gehäuse 4 ist nach Art eines Deckels ausgebildet, welcher mittig von einer Gehäuseöffnung 4.1 durchsetzt wird. Die Gehäuseöffnung 4.1 entspricht vom Durchmesser her in etwa den in Fig. 7 dargestellten Ventilöffnungen 22, in welche das Ventil 21 von oben her eingesteckt wird. Das Gehäuse 4 - und mit diesem die Befestigungsvorrichtung 1 insgesamt - wird über beim Ausführungsbeispiel als Schraubbolzen ausgebildete Befestigungsmittel 6 von oben her über entsprechende Ausnehmungen 23.2 des Manifolds 23 befestigt. Nach erfolgter Befestigung der Befestigungsvorrichtungen 1 an dem Manifold 23 ist die Gehäuseöffnung 4.1 des Gehäuses 4 koaxial zu der darunterliegenden Ventilöffnung 22 des Manifolds 23 ausgerichtet.

In Fig. 8 ist die Verriegelungsstellung der beiden Riegelschieber 3 dargestellt, in welcher diese das Ventil 21 nach Art einer beidseitigen Riegelfalle in der Ventilöffnung 22 verriegeln. In dieser Stellung befinden sich die Verriegelungsbereiche 3.1 innerhalb der Kontur der Öffnung 4.1 und greifen in die Verriegelungsstruktur 21.5 des Ventils 21 ein, wodurch das Ventil 21 in axialer Richtung formschlüssig innerhalb der Ventilöffnung 22 gehalten wird. Zum Lösen des Ventils 21 ist es zunächst erforderlich, die Sicherungselemente 5 zu entfernen und anschließend die Riegelschieber 3 zu betätigen, was nachfolgend anhand der Darstellung in Fig. 9 näher erläutert werden wird.

Fig. 9a) zeigt in perspektivischer Ansicht eine Befestigungsvorrichtung 1 gemäß den Darstellungen in Fig. 8, in welcher sich die beiden Riegelschieber 3 in deren Verriegelungsposition befinden und dort über die Sicherungselemente 5 (vgl. auch Fig. 12) gegen ungewolltes Bewegen gesichert sind.

Zum Lösen der Verriegelung werden gemäß der Darstellung in Fig. 9b) zunächst die Sicherungselemente 5, welche eine Bewegung der Riegelschieber 3 gegenüber dem Gehäuse 4 mechanisch blockieren, entfernt. Beim Ausführungsbeispiel werden die Sicherungselemente 5 nach oben verkippt und können dann gemäß der Darstellung in Fig. 9c) entfernt werden. Nachdem die Sicherungselemente 5 entfernt wurden, können die beiden gegenüberliegend angeordneten Riegelelemente 3 entgegen der Kraft der Feder 2 bewegt und hierdurch die Verriegelung aufgehoben werden.

Beim Ausführungsbeispiel ist eine Feder 2 in Form einer Spiralfeder vorgesehen. Es sind jedoch auch andere Arten von Federn denkbar.

In Fig. 9d) ist dargestellt, dass zum Entriegeln eine in Riegelrichtung R weisende Kraft auf die Riegelschieber 3 ausgeübt wird, wodurch diese dann in die Position gemäß Fig. 9e) bewegt werden, in welcher die Verriegelungsbereiche 3.1 der Riegelschieber 3 aus der Gehäuseöffnung 4.1 hinaus bewegt wurden. Dies ist die Offenstellung der Befestigungsvorrichtung 1. In dieser Stellung kann ein Ventil 21 in dessen Ventilöffnung 22 eingesetzt bzw. aus dieser herausgenommen werden.

Mit der vorstehend beschriebenen Befestigungsvorrichtung 1 ist es möglich, ein Ventil 21 mit nur einem Handgriff zu lösen bzw. zu befestigen. Hierzu ist es für den Monteur lediglich erforderlich, die beiden Riegelschieber 3 in gegenläufiger Richtung zu betätigen. Die Betätigung erfolgt manuell ohne zusätzliches Werkzeug. Der Monteur kann beispielsweise mit dem Daumen den einen Riegelschieber 3 und mit dem Zeigefinger der gleichen Hand den anderen Riegelschieber 3 an deren Betätigungsbereichen 3.2 mit einem Druck beaufschlagen, wodurch die Verriegelungsabschnitte 3.1 aus der Gehäuseöffnung 4.1 bzw. aus der Verriegelungsstruktur 21.5 des Ventils 21 herausbewegt werden. Hierdurch wird die Verriegelung zwischen dem Ventil 21 und der Befestigungsvorrichtung 1 gelöst. Sobald der Monteur seine Finger von der Befestigungsvorrichtung entfernt, bewegen sich die Riegelschieber 3 bzw. deren Verriegelungsbereiche 3.1, getrieben über die in Richtung der Schließstellung vorgespannte Feder 2, selbsttätig in deren Verriegelungsstellung.

### Bezugszeichen:

- 1: Befestigungsvorrichtung
- 2: Feder
- 3: Riegelschieber
- 3.1: Verriegelungsbereich
- 3.2: Befestigungsbereich
- 3.3: Ausnehmung
- 4: Riegelgehäuse
- 4.1: Gehäuseöffnung
- 4.2: Ausnahme
- 5: Sicherungselement
- 6: Befestigungsmittel
- 20: Ventilanordnung
- 21: Ventil
- 21.1: Spule
- 21.2: Einsteckbereich
- 21.3: Ventileinlass
- 21.4: Ventilauslass
- 21.5: Verriegelungsstruktur
- 21.6: Dichtung
- 22: Ventilöffnung
- 23: Manifold
- 23.1: Einlass
- 23.2: Ausnehmung

- L: Langseite
- K: Kurzseite
- R: Riegelrichtung

## Patentansprüche

1. Vorrichtung zur Befestigung eines Ventils (21), insbesondere eines Kartuschenventils, in einer Ventilöffnung (22),
**gekennzeichnet durch**
mindestens einen entgegen der Kraft einer sich spannenden Feder (2) bewegbaren Riegelschieber (3) zur Verriegelung des Ventils (21) in der Ventilöffnung (22).

2. Vorrichtung nach Anspruch 1, **dadurch gekennzeichnet, dass** der Riegelschieber (3) aus dessen Verriegelungsstellung in Richtung dessen Offenstellung entgegen der Kraft der Feder (2) bewegbar ist.

3. Vorrichtung nach einem der Ansprüche 1 oder 2, **dadurch gekennzeichnet, dass** der Riegelschieber (3) eine bügelförmige Geometrie aufweist, an deren Innenseite ein Verriegelungsbereich (3.1) vorgesehen ist.

4. Vorrichtung nach einem der vorhergehenden Ansprüche, **dadurch gekennzeichnet, dass** der Riegelschieber (3) einen bogenförmigen Verriegelungsbereich (3.1) aufweist.

5. Vorrichtung nach einem der vorhergehenden Ansprüche, **dadurch gekennzeichnet, dass** der Riegelschieber (3) einen Betätigungsbereich (3.2) aufweist.

6. Vorrichtung nach einem der vorhergehenden Ansprüche, **gekennzeichnet durch** ein dem Riegelschieber (3) zugeordnetes Sicherungselement (5), über welches Bewegungen des Riegelschiebers (3) blockierbar sind.

7. Vorrichtung nach einem der Ansprüche 1 bis 6, **gekennzeichnet durch** zwei gegenläufig angeordnete Riegelschieber (3).

8. Vorrichtung nach Anspruch 6, **dadurch gekennzeichnet, dass** die beiden Riegelschieber (3) in einem gemeinsamen Riegelgehäuse (4) angeordnet sind, welches eine Gehäuseöffnung (4.1) zur Aufnahme des Ventils (21) aufweist.

9. Vorrichtung nach Anspruch 6, **dadurch gekennzeichnet, dass** die Riegelschieber (3) derart angeordnet sind, dass diese in deren Verriegelungsstellung in die Gehäuseöffnung (5) hinein ragen und diese in deren Offenstellung freigeben.

10. Ventilanordnung mit einem mehrere Ventilöffnungen (22) aufweisenden Manifold (23) und mehreren in den Ventilöffnungen (22) befestigten Ventilen (21),
**dadurch gekennzeichnet,**
**dass** die Ventile (21) jeweils über eine Befestigungsvorrichtung (1) nach einem der Ansprüche 1 bis 9 in den Ventilöffnungen (21) befestigt sind.

11. Ventilanordnung nach Anspruch 10, **dadurch gekennzeichnet, dass** das Manifold (23) als Verteilerblock ausgebildet ist.

12. Ventilanordnung nach einem der Ansprüche 10 oder 11, **dadurch gekennzeichnet, dass** die Verteileröffnungen (22) entlang einer Langseite (L) des Manifolds (23) reihenförmig angeordnet sind, wobei die Riegelrichtungen der Riegelschieber (3) quer zur Langseite (L) ausgerichtet sind.

13. Ventilanordnung nach einem der Ansprüche 10 bis 12, **dadurch gekennzeichnet, dass** die Gehäuseöffnungen (4.1) der Befestigungsvorrichtungen (1) koaxial zu den Ventilöffnungen (22) angeordnet sind.

14. Ventilanordnung nach einem der Ansprüche 10 bis 13, **dadurch gekennzeichnet, dass** die Ventile (21) Verriegelungsstrukturen (21.5) aufweisen, die mit den Riegelelementen (3) verriegelnd zusammenwirken.

15. Ventilanordnung nach Anspruch 14, **dadurch gekennzeichnet, dass** die Verriegelungsstrukturen (21.5) nach Art umlaufender Nuten ausgebildet sind.
